# EUROPÄISCHE PATENTSCHRIFT

(11) **EP 1 922 799 B1**
(45) Veröffentlichungstag und Bekanntmachung des Hinweises auf die Patenterteilung: **07.09.2011**
(21) Anmeldenummer: 06776250.0
(22) Anmeldetag: 15.07.2006
(51) Int. Cl.: H02K 16/04, H02K 1/27, H02K 41/03

(54) **ELEKTRISCHER ANTRIEB MIT TOPFFÖRMIGEM ANKER UND AUSSENLIEGENDEN PERMANENTMAGNETELEMENTEN**
ELECTRIC DRIVE HAVING A BELL-SHAPED ARMATURE AND EXTERNAL PERMANENT MAGNET ELEMENTS
ENTRAINEMENT ELECTRIQUE A INDUIT EN POT ET ELEMENTS MAGNETIQUES PERMANENTS EXTERIEURS

(30) Priorität: 25.08.2005 DE 102005040389
(43) Veröffentlichungstag der Anmeldung: 21.05.2008
(73) Patentinhaber: IPGATE AG, 8044 Zürich (CH)
(72) Erfinder: LEIBER, Thomas, 81675 München (DE)
(74) Vertreter: Lenzing Gerber Stute
(86) Internationale Anmeldenummer: PCT/EP2006/006951
(87) Internationale Veröffentlichungsnummer: WO 2007/022833

(56) Entgegenhaltungen:
- WO-A-92/22122
- WO-A-02/093719
- WO-A-2006/000260

## Beschreibung

Die vorliegende Erfindung betrifft einen elektrischen Antrieb nach dem Oberbegriff des Anspruch 1.

Diese Erfindung baut auf dem Offenbarungsgehalt der PCT/EP2005/00241 WO 2006/00260 auf. In Ergänzung zu PCT/EP2005/002441 des gleichen Anmelders soll in dieser Erfindung die Effizienz des magnetischen Kreises weiter verbessert werden. Dies wird dadurch erreicht, dass die Glocke als dünnwandige Innenglocke aus insbesondere ferromagnetischen Material ausgeführt ist und die Magnete außen an der Glocke angebracht sind.

Die in Fig. 1 der PCT/EP2005/002441 dargestellte Ausführung des Glockenläufers hat den Nachteil, dass sich der magnetische Fluß über die Glocke zum Stator kurzschließt, sofern die Glocke aus ferromagnetischen Material ausgeführt ist. Dieser Streufluss führt zu einer Drehmomentenreduzierung. Wenn die Glocke aus nicht ferromagnetischen Material ausgeführt ist, wird der Arbeitsluftspalt erhöht. Dies führt ebenfalls zu magnetischen Streuverlusten.

Aus der WO02/093719 ist ein Antrieb bekannt, bei dem ein topfförmiger Läufer an seiner Außenseite mit Permanentmagneten bestückt ist, welche in Aussparungen angeordnet sind. Die Permanentmagnete erstrecken sich lediglich über einen Teil der axialen Längserstreckung der zylindrischen Wandung des topfförmigen Läufers. Der Topf ist aus einem nichtmagnetischen Metall ausgebildet um die magnetischen Streuflüsse zu minimieren. Die Permanentmagnetelemente haben eine radiale Dicke, die ungefähr der Dicke der zylindrischen Wandung des topfförmigen Teils, mit Ausnahme der Bereiche der Aussparungen, entspricht. Das topfförmige Teil ist als Drehteil ausgebildet, wobei die Bodenwandung wesentlich dicker als die zylindrische Wandung ausgebildet ist. Zusätzlich müssen die Aussparungen für die Permanentmagnetelemente außen in die zylindrische Wandung eingefräst werden, in denen die Permanentmagnete einliegen, d.h. die Permanentmagnete liegen nicht außen an der zylindrischen wandung an, sondern zum Teil in der Wandung eingebettet. Hierdurch ist der topfförmige Läufer relativ aufwendig und teuer in der Herstellung.

Aus der WO92/22122 und der WO2006/000260 sind elektrische Antriebe bekannt, die einen einstückigen topfförmigen Läufer aufweisen, bei dem die Permanentmagnete innen and der zylindrischen Wandung anliegen.

Wird dagegen die Glocke als Innenglocke aus ferromagnetischen Material ausgeführt, stellt die Glocke faktisch einen magnetischen Leiter dar und es wird sichergestellt, dass der magnetische Fluß des Erregerjoches die Permanentmagnete ohne nennenswerten schädlichen Streufluss durchsetzt. Durch die Innenglockenausführung kann das Drehmoment im Vergleich zur Aussenglockenausführung vorteilhaft um ca- 20-30% erhöht werden.

Ein weiterer Vorteil der Innenglocke besteht darin, dass die kraftwirksame Länge der Permanentmagnete bei gegebenen Bauraum weiter erhöht werden kann. Während bei der Aussenglocke der Glockenboden, insbesondere bei der Gestaltung als beidseitige Glocke, eine Trennung der Permanentmagnete erfordert, kann bei der Innenglocke in axialer Richtung die Glocke auf der ganzen Länge mit Permanentmagneten bestückt werden.

Bei hoher Belastung, z.B. hohen Drehzahlen, ist eine Komplettkapselung bzw. Ummantelung der Magnete vorteilhaft, damit ein Ausbrechen oder Absplittern der Magnete in Radialrichtung verhindert wird. Dies kann beispielsweise durch ein nichtmagnetisches Material, z.B. eine Folie oder einen Schrumpfschlauch bzw. durch Verklebung an der Oberfläche erreicht werden.

Die Erfindung sieht ebenfalls vor, dass zwei topfförmige Teile bzw. Glocken axial nebeneinander auf der Welle angeordnet sind und zusammen den Rotor bilden. Dabei können die bodenförmigen Wandungen zweier benachbart angeordneten Töpfe durch eine gemeinsame Bodenwandung gebildet sein. Es ist ebenso möglich, dass die zylindrische Wandung zweier benachbarter topfförmiger Teile durch eine gemeinsame Hülse gebildet ist, wobei dann die Kraftübertragung über eine gemeinsame oder durch zwei oder mehrere Bodenwandungen von der zylindrischen Wandung auf die Welle erfolgt.

Es ist selbstverständlich ebenso möglich, mehrere Permanentmagnete in axialer Richtung nebeneinander in einem topfförmigen Teil anzuordnen. Gleiches gilt auch für die Anordnung von mehreren axial nebeneinander angeordneten topfförmigen Teilen, welche ebenfalls jeweils mehrere axial nebeneinander angeordnete Permanentmagnete aufweisen können. Der Vorteil mehrerer aneinander gereihter Magnete mit kleinem Abstand besteht darin, dass die unterschiedlichen thermischen Ausdehnungskoeffizienten von Permanentmagneten und Glocke sich nicht negativ auswirken. Auch kann die axiale Länge der axial nebeneinander angeordneten topfförmigen Teile unterschiedlich sein.

Eine vorteilhafte Einbettung bei gleichzeitig leichter Montage kann dadurch erreicht werden, dass die Permanentmagnete jeweils einseitig an einer Ausdrückung bzw. Sicke der Glocke anliegen und jeweils zwei benachbarte Magnete durch ein Füllmaterial mit großen Temperaturkoeffizienten, z.B. Giesharz, Kleber, im Abstand zueinander fixiert werden. Das Füllmaterial gewährleistet eine Temperaturkompensation bei Erwärmung des Motors. Vorzugsweise werden die Permanentmagnetelemente auf der Glockenauflagefläche verklebt. Dies ist erforderlich, da die Permanentmagnete einen sehr kleinen Ausdehnungskoeffizienten besitzen.

Die vorbeschriebenen topfförmigen Teile sind ähnlich den Glocken bekannter Glockenläufer ausgestaltet. Die zylindrische Wandung stützt sich radial jedoch nur über die Bodenwandung an der Welle ab.

Der Antrieb wird entweder als kontinuierlich drehender Motor, Schrittmotor oder Segmentmotor verwendet. Ebenso ist es möglich, den Antrieb auch als Linearantrieb zu verwenden. Beim Linearantrieb wird der Rotor nicht um seine Achse verdreht, sondern in axialer Richtung vom Magnetfeld hin und her verstellt.

Auch ist es möglich, dass die Spulen des Außenstators und die Permanentmagnete des Rotors wie bei einem Transversalflußmotor angeordnet sind. Ein derartiger Transversalflußmotor ist z.B. im "Handbuch Elektrische Kleinantriebe", Carl Hanser Verlag, beschrieben. Der Innenstator ist dabei entsprechend auszugestalten.

Nachfolgend werden verschiedene Ausgestaltungen des erfindungsgemäßen Antriebs anhand von Zeichnungen näher erläutert.

Es zeigen:
- Fig. 1:: Erfindungsgemäßer elektrischer Antrieb mit zwei Glocken als Innenläufer;
- Fig. 1a:: Detaildarstellung der Konstruktion der Glocken;
- Fig. 1b:: Querschnittsdarstellung durch eine Glocke;
- Fig. 2:: Antrieb mit nur einer einseitigen Glocke;
- Fig. 3:: erfindungsgemäßer Antrieb als Segmentmotor;
- Fig. 4:: erfindungsgemäßer Antrieb als Linearmotor

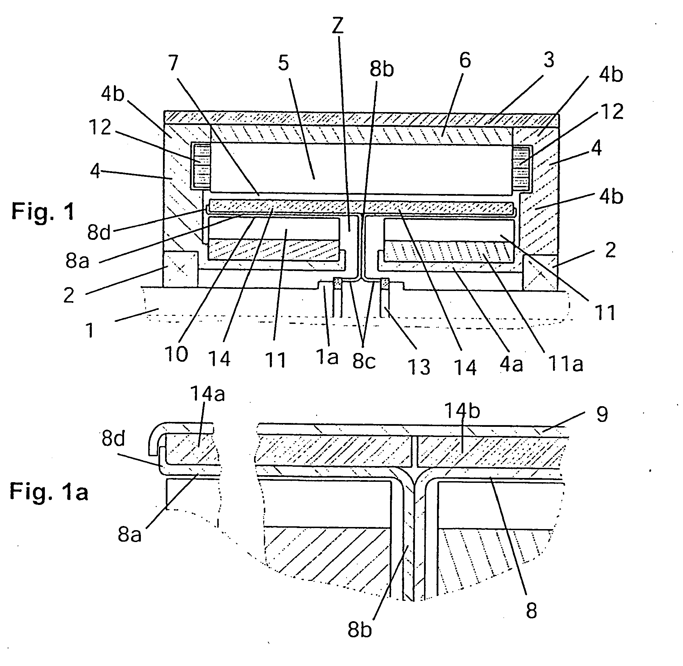

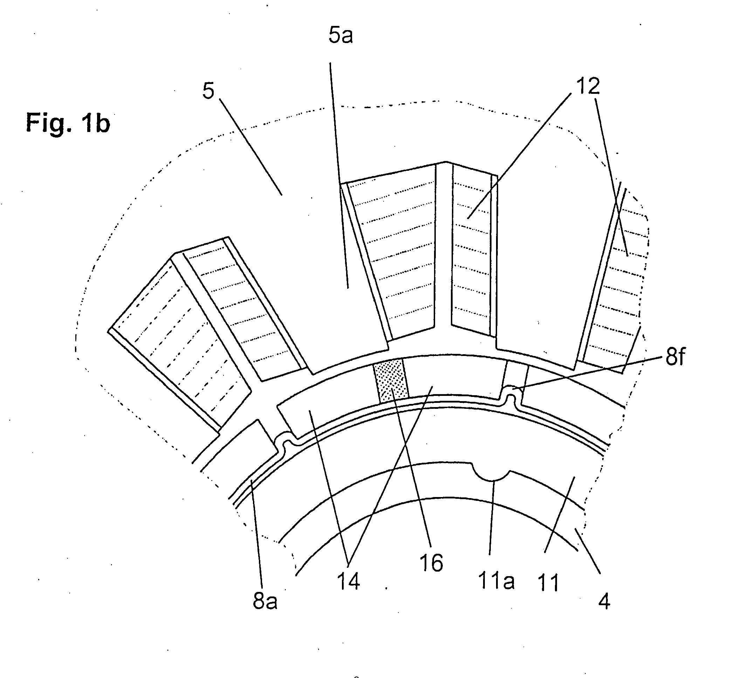

Fig. 1 zeigt einen Längsschnitt durch eine erste Ausführungsform eines erfindungsgemäßen Antriebs. Zur Übertragung des im Antrieb erzeugten Drehmoments ist eine Antriebswelle 1 vorgesehen, die mit zwei Wälzlagern 2 drehbar im Gehäuse des Antriebs gelagert ist. Das Gehäuse setzt sich aus den beiden Gehäusehälften 4 und dem Gehäusemantel 3 zusammen. Die Gehäusehälften 4 weisen zylindrische Wandungen 4a auf, die an den stirnseitigen Gehäusewänden 4b angeformt sind. Die zylindrischen Wandungen 4a tragen den Innenstator 11, 11a, welcher zweigeteilt ist und einen Zwischenraum Z in der Mitte bildet. Durch den Zwischenraum Z greifen die Bodenwandungen 8b der topfförmigen Teile 8 hindurch und stützen sich mit ihrem nach außen gerichteten Kragen 8c ab, welcher durch ein entsprechendes Profil die Drehmomentübertragung zwischen Rotor und Welle gewährleistet. In axialer Richtung sind die topfförmigen Teile 8 gegen axiales Verschieben mittels Sicherungsringen 13 gesichert, welche in Nuten des mittleren Bereichs 1a der Welle 1 formschlüssig einliegen. Die topfförmigen Elemente sind mit ihren scheibenförmigen Bodenwandungen 8b zueinander zugewandt, so dass die Innenstatoren 11, 11a, welche auf den zylindrischen Wandungen 4a der Gehäuseteile 4 angeordnet sind, in die Töpfe mit den daran angeordneten Permanentmagneten 14 axial von außen montierbar sind.

Jedes topfförmige Teil 8 hat eine radial außen an der Bodenwandung 8b angeformte zylindrische Wandung 8a. Außen an der zylindrischen Wandung 8a sind die Permanentmagnete 14 angebracht. Die Glocke ist am äußeren Ende 8d umgestülpt, was die Magnete axial fixiert und zu einer merklichen Versteifung beiträgt.

Der in Fig. 1 dargestellte erfindungsgemäße Antrieb ist als sogenannter Innenläufer ausgebildet, das heißt, lediglich der Außenstator 5, 6 trägt Erregerspulen 12. Der Innenstator 11, 11a dient lediglich für den magnetischen Rückschluss. Zwischen der Glocke und dem Innenstator 11 ist ein Luftspalt 10, zwischen Glocke und dem Außenstator 5 ein zweiter Luftspalt 7 vorgesehen. Vorzugsweise sind die Luftspalte 7 und 10 gleich groß. Die Pole der Außen- und Innenstatoren sind derart ausgebildet, dass sie zusammen mit den im topfförmigen Teil 8 befindlichen Permanentmagneten 14 Magnetkreise bilden, die die zylindrische Wandung 8a und Ummantelung 9 vollständig durchdringen. Die Permanentmagnete 14 sorgen dabei für eine magnetische Vorspannung.

Die Permanentmagnete 14 sind außen auf die zylindrische Wandung 8a aufgeklebt. Sie können jedoch auch andersartig an der zylindrischen wandung befestigt werden.

Die Fig. 1a zeigt lediglich Ausschnitte des Rotors, der eine Abdeckung bzw. Ummantelung 9 der Magnete aufweist. Die Abdeckung ist vorzugsweise als Folie oder Schrumpfschlauch ausgeführt, und gewährleistet, dass die Permanentmagnete am Absplittern oder Ausbrechen gehindert werden, wenn hohe radiale Belastungen, z.B. Zentrifugalkräfte durch hohe Drehzahlen, auf den Rotor wirken. Die Abdeckung ist vorzugsweise sehr dünnwandig ausgeführt, so dass der Abstand der Permanentmagnete zum Erregerstator möglichst gering ist. Ferner ist dargestellt, dass die Magnete 14a, 14b in axialer Richtung mehrteilig ausgeführt sind. Aus Kostengründen ist es sinnvoll, dass in axialer Richtung möglichst viele Magnete angeordnet sind, damit das Verhältnis der Länge der Magnete zur Breite und Höhe möglichst klein wird. Außerdem ist der unterschiedliche Ausdehnungskoeffizient der Permanentmagnete und der Glocke somit besser beherrschbar.

Die Fig. 1b zeigt einen Querschnitt durch ein Segment des Rotors. Die zylindrische Wandung 8a des äußeren Topfes weist Sicken bzw. Einkerbungen 8f auf, an denen die Permanentmagnetelemente 14 einseitig anliegen. Der verbleibende Zwischenraum zwischen den Magneten wird mit einem Füllmaterial, z.B. Gießharz 16, gefüllt ist, welches die Ausdehnungsunterschiede der einzelnen Teile zueinander bei Temperaturschwankungen ausgleicht. Bekanntlich haben die Magnete quer zur Magnetisierungsrichtung sehr kleine oder negative Ausdehnungskoeffizienten. Ferner ist in Fig. 1b ein Ausschnitt des Erregerjoches 5 dargestellt, welches konusförmige Schenkel 5a aufweist und die Erregerspulen 12 trägt. Das Innenjoch 11 ist vorzugsweise als zylindrisches Blechpaket ohne Pole ausgeführt. Die Vermeidung von Polen beim Innenjoch wirkt sich vorteilhaft auf das Rastmoment aus. Die konusförmige Gestaltung der Erregerjochschenkel ermöglicht hohe Durchflutungen sowie eine einfache Spulenmontage. Das Innen und auch Außenjoch hat ein entsprechendes Profil, welches in das Gehäuse 4 hineinragt und damit verdrehsicher ist.

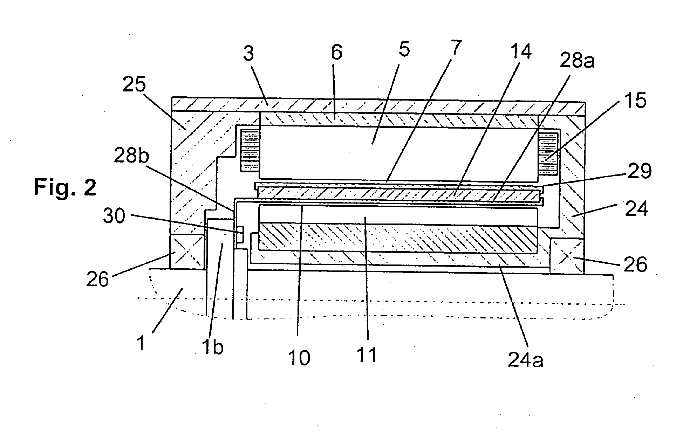

Die Fig. 2 zeigt eine weitere erfindungsgemäße Ausführungsform, mit lediglich einer Glocke 28, die mit ihrer Bodenwandung 28b durch Befestigungsmittel 30 an dem Bereich 1b der Welle 1 drehsicher befestigt ist. Die Glocke 28 umgreift mit ihrer gesamten axialen Länge den Innenstator 11. Der Innenstator 11 ist auf einer zylindrischen Wandung 24a des rechten Gehäuseteils 24 gelagert. Das Gehäuse selbst ist durch die zylindrische Mantelfläche 3 und das weitere Gehäuseteil 25 verschlossen, wobei die Welle 1 über Lager 26 drehbar im Gehäuse gelagert ist. Die Glocke 28 weist eine zylindrische Wandung 28a auf, an der außenliegend die Permanentmagnete 14 anliegen und mit dem Außenstator 5 einen Luftspalt 7 bilden. Von außen werden die Permanentmagnete über einen Schrumpfschlauch 29 gehalten. Zwischen Glocke 28 und Rückschluss bzw. Innenstator 11 ist ein zweiter Luftspalte 10 vorgesehen, der vorzugsweise gleich so groß ist wie der Luftspalt 7. Durch eine nicht dargestellte Lagerstelle für die Welle im Gehäuse 24a, kann das Gehäuse 25 auf dieser Seite geschlossen ausgebildet werden.

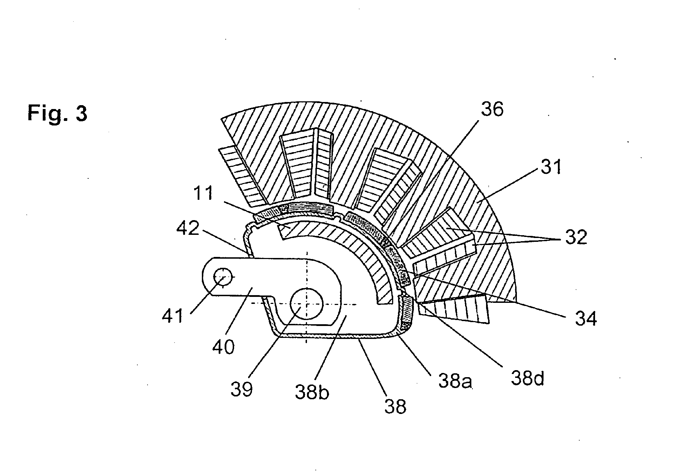

Die Fig. 3 zeigt eine weitere mögliche Ausgestaltung des erfindungsgemäßen Antriebs, wobei dieser als Segmentmotor ausgebildet ist. Der Segmentmotor weist eine asymmetrische Glocke 38 auf. Die Magnete 34 sind außerhalb der Glocke angeordnet und stützen sich in Umfangsrichtung an den Sicken 38d ab, wobei zwischen den benachbarten Permanentmagneten 34 Temperaturausgleichselemente 36 angeordnet sind. Der Außenstator 31 trägt die Erregerspule 32. Der Innenstator 11 ist als zylindrisches Segment ausgeführt Die Glocke 38 ist über ihre Bodenwandung 38b an dem Übertragungsglied 40 mit der Welle 39 verbunden. Die Kraftübertragung vom zylindrischen Mantel 38a und dem Übertragungsglied 40 kann entweder am Ende einer Glocke oder zwischen zwei Glocken erfolgen. Die Glocke 38 hat hierfür eine entsprechende Aussparung 42. Von dem Übertragungsglied 40 kann über die Lagerbohrung 41 ein nicht gezeichnetes Kopplungsglied angeschlossen werden

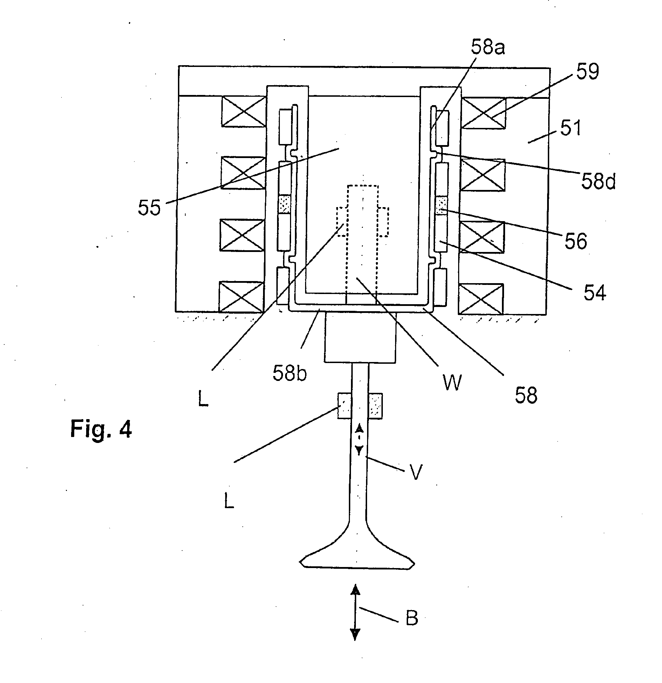

Die Fig. 4 zeigt eine weitere Ausführungsform des erfindungsgemäßen Antriebs als Linearantrieb. In der dargestellten Ausführungsform trägt der Außenstator 51 eine oder mehrere Erregerspulen 59. In dieser Ausgestaltung sind die Magnete 54 außen an der Glocke 58 angeordnet, wobei sie durch Temperaturausgleichselemente 56 voneinander beabstandet sind und durch Sicken oder Stegen 58d in der Glocke sowie einem optionalen und nach außen gerichteten Kragen (nicht dargestellt) in Position gehalten sind. Die zylindrische Wandung 58a ist über die Bodenwandung 58b mit der Welle W in Verbindung. Zwischen der zylindrischen Außenfläche der zylindrischen Wandung 58a und dem Innenstator 51 ist ein Luftspalt. Ebenfalls ist ein Luftspalt zwischen dem Außenstator 55 und den Permanentmagnetelementen 54. Der magnetische Fluß durchdringt die zylindrische Wandung 58a sowie beide Luftspalte und bildet zusammen mit den Permanentmagnetelementen 54 sowie beider Statoren mehrere Magnetkreise.

Auch bei dem Antrieb gem. der Figur 4 kann optional eine nicht dargestellte Ummantelung vorgesehen werden.

Die Glocke kann rund, oval oder auch als Rechteck oder Kastenprofil ausgebildet sein. Sie ist aus ferromagnetischem Material ausgeführt und über die beiden Lager L und über die Welle W in axialer Richtung verschieblich gelagert. An der Welle W kann zum Beispiel ein Ventil V eines Verbrennungsmotors befestigt sein, welches durch den sich auf- und ab bewegenden Rotor periodisch öffnet bzw. schließt.

Sofern die Magnete an ihrer Kontaktfläche zur zylindrischen Wandung des Rotors flach ausgebildet sind, sollte der Kontaktbereich der zylindrischen Wandung ebenfalls flach ausgebildet sein, damit die Permanentmagnetelemente vollflächig an der zylindrischen Wandung anliegen. Hierdurch können geometrisch einfach und kostengünstig herstellbare Magnete einfach und vollflächig mit der Wandung verklebt werden.

## Patentansprüche

1. Elektrischer Antrieb mit feststehendem Außen- und Innenstator (5, 6; 11, 11a) und einem Rotor, wobei mehrere am Rotor angeordnete Permanentmagnetelemente (14, 34, 54) zur Erzeugung eines Erregerflusses und zumindest eine elektrische Erregerspule (12, 15, 32) vorgesehen sind, wobei der Rotor mindestens ein topfförmiges Teil (8, 28, 38, 58) hat, welches eine zylindrische Wandung (8a, 28a, 38a, 58a) sowie eine Bodenwandung (8b, 28b, 38b, 58b) aufweist, wobei. die Bodenwandung (8b, 28b, 38b, 58b) senkrecht und die zylindrische Wandung (8a, 28a, 38a, 58a) koaxial zur Achse der Rotorwelle (1, 39, W) angeordnet ist und die Bodenwandung (8b, 28b, 38b, 58b) zur Übertragung einer Kraft bzw. eines Drehmoments mit der Rotorwelle (1, 39, W) verbunden ist, wobei die Permanentmagnetelemente (14, 34, 54) einseitig an der zylindrischen wandung (8a, 28a, 38a, 58a) anliegen und in Umfangsrichtung nebeneinander am Rotor des Antriebs befestigt sind, wobei die Permanentmagnetelemente (14, 34, 54) zusammen mit dem Außen- und Innenstator (5,6; 11, 11a) den zylindrischen Teil des Rotors radial vollständig durchgreifende Magnetkreise bilden, wobei die zylindrische Wandung (8a, 28a, 38a, 58a) mit der Bodenwandung (8b, 28b, 38b, 58b) einstückig ist, und wobei zwischen der Wandung (8a, 28a, 38a, 58a) und dem den magnetischen Rückschluss bildenden Rückschlussteil oder Innenstator ein Luftspalt ist und der Außenstator mindestens eine Erregerspule trägt **dadurch gekennzeichnet, dass** die Permanentmagnetelemente (14, 34, 54) nur außen an der zylindrische Wandung (8a, 28a, 38a, 58a) angeordnet sind und wobei die zylindrische Wandung aus einem ferromagnetischen Werkstoff ist.

2. Elektrischer Antrieb nach Anspruch 1, **dadurch gekennzeichnet, dass** die Permanentmagnetelemente (14, 34, 54) in axialer Richtung parallel zur zylindrischen Wandung angeordnet sind.

3. Elektrischer Antrieb nach Anspruch 1 oder 2, **dadurch gekennzeichnet, dass** die zylindrische Wandung (8a, 28a, 38a, 58a) axial verlaufende und radial nach außen gerichtete Einkerbungen oder Sicken (8d, 38d, 58d) aufweist, and denen die Permanentmagnetelemente (14, 34, 54) abgestützt sind oder anliegen.

4. Elektrischer Antrieb nach Anspruch 3, **dadurch gekennzeichnet, dass** der Zwischenraum zwischen den Einkerbungen bzw. Sicken (8f, 36, 56) und den Permanentmagnetelementen (14, 34, 54) mit einem Füllstoff (16, 36, 56) ausgefüllt ist.

5. Elektrischer Antrieb nach einem der vorhergehenden Ansprüche, **dadurch gekennzeichnet, dass** der Rotor außen von einem einhüllende zylindrischen Teil ummantelt ist, wobei das zylindrische Teil insbesondere eine dünnwandige Hülse ist, deren Wandstärke kleiner als die Wanddicke der zylindrischen Wandung ist.

6. Elektrischer Antrieb nach Anspruch 5, **dadurch gekennzeichnet, dass** das einhüllende zylindrische Teil aus einem nicht-ferromagnetischen Material ist.

7. Elektrischer Antrieb nach einem der vorhergehenden Ansprüche, **dadurch gekennzeichnet, dass** der Antrieb zwei zylindrische Wandungen (8a) aufweist, die axial nebeneinander angeordnet sind und an denen außenliegend Permanentmagnetelemente (14) angeordnet sind, wobei zwischen den zylindrischen Wandungen (8a) mindestens eine Bodenwandung (8b) angeordnet ist.

8. Elektrischer Antrieb nach Anspruch 7, **dadurch gekennzeichnet, dass** jede zylindrische Wandung (8a) mit einer jeweils zugehörigen Bodenwandung (8b) ein topfförmiges Teil (8) bildet.

9. Elektrischer Antrieb nach Anspruch 8, **dadurch gekennzeichnet, dass** die beiden Bodenwandungen (8b) aneinander anliegen und insbesondere miteinander verbunden sind.

10. Elektrischer Antrieb nach Anspruch 7, **dadurch gekennzeichnet, dass** die zylindrischen Wandungen an der einen Bodenwandung befestigt sind oder das zumindest eine zylindrische Wandung mit der Bodenwandung einstückig ausgebildet ist und die andere zylindrische Wandung mit der Bodenwandung verbunden ist.

11. Elektrischer Antrieb nach einem der Ansprüche 7 bis 10, **dadurch gekennzeichnet, dass** die beiden die Permanentmagnetelemente tragenden zylindrischen Wandungen außen von einer gemeinsamen insbesondere dünnwandigen Hülse oder Mantel umfasst sind.

12. Elektrischer Antrieb nach einem der vorhergehenden Ansprüche, **dadurch gekennzeichnet, dass** die Welle die mindestens eine Bodenwandung durchgreift und die Bodenwandung insbesondere formschlüssig an der Welle befestigt ist.

13. Elektrischer Antrieb nach einem der vorhergehenden Ansprüche, **dadurch gekennzeichnet, dass** mehrere Permanentmagnetelemente aufweisende topfförmige Teile axial nebeneinander auf einer Welle angeordnet sind.

14. Elektrischer Antrieb nach Anspruch 13, **dadurch gekennzeichnet, dass** zwei topfförmige Teile einem gemeinsamen Außen- und Innenstator zugeordnet sind.

15. Elektrischer Antrieb nach einem der vorhergehenden Ansprüche, **dadurch gekennzeichnet, dass** der Antrieb als Segmentmotor ausgebildet ist, wobei das topfförmige Teil lediglich ein Segment eines vollständigen Topfes ist.

16. Elektrischer Antrieb nach einem der vorhergehenden Ansprüche 1 bis 18, **dadurch gekennzeichnet, dass** die magnetische Kraft den Rotor in axialer Richtung der Rotorachse linear hin und her verstellt.

17. Elektrischer Antrieb nach Anspruch 16, **dadurch gekennzeichnet, dass** die Permanentmagnetelemente an radial umlaufenden und/oder sich in axialer Richtung erstreckenden Ausbuchtungen oder Sicken (8f, 38d, 58d), welche an der zylindrische Wandung radial nach außen ausgeformt sind, anliegen.

18. Elektrischer Antrieb nach einem der vorhergehenden Ansprüche, **dadurch gekennzeichnet, dass** die Bodenwandung die gleiche Dicke wie die zylindrische Wandung des topfförmigen Teils aufweist. (neu, Offenbarung durch die Figuren, insb. Fig. 1a)

19. Elektrischer Antrieb nach einem der vorhergehenden Ansprüche, **dadurch gekennzeichnet, dass** die Bodenwandung eine andere Dicke als die zylindrische Wandung des topfförmigen Teils aufweist, wobei insbesondere die Bodenwandung dicker als die zylindrische Wandung ist.

20. Elektrischer Antrieb nach einem der vorhergehenden Ansprüche, **dadurch gekennzeichnet, dass** die Bodenwandung mehrteilig, insbesondere zweiteilig ausgebildet ist.

21. Elektrischer Antrieb nach einem der vorhergehenden Ansprüche, **dadurch gekennzeichnet, dass** die zylindrische Wandung (8a, 28a, 38a) an ihrer der Bodenwandung abgewandten Seite einen in radialer Richtung weisenden Kragen (9) hat.

22. Elektrischer Antrieb nach einem der vorhergehenden Ansprüche, **dadurch gekennzeichnet, dass** die Querschnittsform der Glocke bzw. des topförmigen Teils des Rotors kreisförmig, oval, rechteckig oder kreissegmentförmig ausgebildet ist.

23. Elektrischer Antrieb nach einem der vorhergehenden Ansprüche, **dadurch gekennzeichnet, dass** die radiale Dicke der Permanentmagnetelemente (14, 34, 54) größer ist als die Dicke der gesamten zylindrischen Wandung (8a, 28a, 38a, 58a) (Offenbarung dieses Merkmals durch die Figuren 1 bis 4)

## Claims

1. Electric drive having a fixed outer and inner stator (5, 6; 11, 11a) and a rotor, wherein a plurality of permanent magnet elements (14, 34, 54) arranged on the rotor for generating an energising flow and at least one electric field coil (12, 15, 32) are provided, wherein the rotor has at least one cup-shaped part (8, 28, 38, 58) which has a cylindrical wall (8a, 28a, 38a, 58a) and a base wall (8b, 28b, 38b, 58b), wherein the base wall (8b, 28b, 38b, 58b) is arranged perpendicularly and the cylindrical wall (8a, 28a, 38a, 58a) is arranged coaxially in relation to the axis of the rotor shaft (1, 39, W), and the base wall (8b, 28b, 38b, 58b) is connected to the rotor shaft (1, 39, W) in order to transmit a force or a torque, wherein the permanent magnet elements (14, 34, 54) abut on one side on the cylindrical wall (8a, 28a, 38a, 58a) and are attached side by side to the drive rotor in the peripheral direction, wherein the permanent magnet elements (14, 34, 54) together with the outer and inner stators (5, 6; 11, 11a) form magnetic circuits which fully extend through the cylindrical part of the rotor in the radial direction, wherein the cylindrical wall (8a, 28a, 38a, 58a) is integrally formed with the base wall (8b, 28b, 38b, 58b), and wherein there is an air gap between the wall (8a, 28a, 38a, 58a) and the back iron part, forming the magnetic back iron, or inner stator, and the outer stator holds at least one field coil, **characterised in that** the permanent magnet elements (14, 34, 54) are only arranged on the outside of the cylindrical wall (8a, 28a, 38a, 58a), and wherein the cylindrical wall is made from a ferromagnetic material.

2. Electric drive according to Claim 1, **characterised in that** the permanent magnet elements (14, 34, 54) are arranged in the axial direction parallel to the cylindrical wall.

3. Electric drive according to Claim 1 or 2, **characterised in that** the cylindrical wall (8a, 28a, 38a, 58a) has axially running and radially outwardly directed indentations or beads (8d, 38d, 58d), on which the permanent magnet elements (14, 34, 54) are supported or abut.

4. Electric drive according to Claim 3, **characterised in that** the gap between the indentations or beads (8f, 36, 56) and the permanent magnet elements (14, 34, 54) is filled with a filler material (16, 36, 56).

5. Electric drive according to any one of the preceding claims, **characterised in that** the rotor is encased on the outside by an enveloping cylindrical part, wherein the cylindrical part is in particular a thin-walled casing, the thickness of which is less than the thickness of the cylindrical wall.

6. Electric drive according to Claim 5, **characterised in that** the enveloping cylindrical part is made from a non-ferromagnetic material.

7. Electric drive according to any one of the preceding claims, **characterised in that** the drive has two cylindrical walls (8a) which are arranged axially side by side and on which permanent magnet elements (14) are arranged lying on the outside, wherein at least one base wall (8b) is arranged between the cylindrical walls (8a).

8. Electric drive according to Claim 7, **characterised in that** each cylindrical wall (8a) with a respectively associated base wall (8b) forms a cup-shaped part (8).

9. Electric drive according to Claim 8, **characterised in that** the two base walls (8b) abut on one another and in particular are connected to one another.

10. Electric drive according to Claim 7, **characterised in that** the cylindrical walls are attached to the one base wall or the at least one cylindrical wall is integrally formed with the base wall and the other cylindrical wall is connected to the base wall.

11. Electric drive according to any one of Claims 7 to 10, **characterised in that** the two cylindrical walls supporting the permanent magnet elements are enclosed on the outside by a common in particular thin-walled casing or cover.

12. Electric drive according to any one of the preceding claims, **characterised in that** the shaft extends through the at least one base wall and the base wall is attached to the shaft in particular in a form-fitting way.

13. Electric drive according to any one of the preceding claims, **characterised in that** a plurality of cup-shaped parts having permanent magnet elements are axially arranged side by side on a shaft.

14. Electric drive according to Claim 13, **characterised in that** two cup-shaped parts are assigned to a common outer and inner stator.

15. Electric drive according to any one of the preceding claims, **characterised in that** the drive is designed as a segment motor, wherein the cup-shaped part is only one segment of a complete cup.

16. Electric drive according to any one of Claims 1 to 18, **characterised in that** the magnetic force moves the rotor linearly back and forth in the axial direction of the rotor axis.

17. Electric drive according to Claim 16, **characterised in that** the permanent magnet elements abut on bulges or beads (8f, 38d, 58d) which are radially circumferential and/or extend in the axial direction, and which are formed radially outwards on the cylindrical wall.

18. Electric drive according to any one of the preceding claims, **characterised in that** the base wall has the same thickness as the cylindrical wall of the cup-shaped part (new, disclosure by the figures, in particular Fig. 1a).

19. Electric drive according to any one of the preceding claims, **characterised in that** the base wall has a thickness which is different from the cylindrical wall of the cup-shaped part, wherein in particular the base wall is thicker than the cylindrical wall.

20. Electric drive according to any one of the preceding claims, **characterised in that** the base wall is formed in multiple parts, in particular in two parts.

21. Electric drive according to any one of the preceding claims, **characterised in that** the cylindrical wall (8a, 28a, 38a) has, on its side facing away from the base wall, a collar (9) pointing in the radial direction.

22. Electric drive according to any one of the preceding claims, **characterised in that** the cross-sectional shape of the bell or the cup-shaped part of the rotor is circular, oval, oblong or in the shape of a circular segment.

23. Electric drive according to any one of the preceding claims, **characterised in that** the radial thickness of the permanent magnetic elements (14, 34, 54) is greater than the thickness of the entire cylindrical wall (8a, 28a, 38a, 58a) (this feature is disclosed by the Figures 1 to 4).

## Revendications

1. Entraînement électrique avec stator extérieur et intérieur stationnaire (5, 6 ; 11, 11a) et avec un rotor, dans lequel plusieurs éléments à aimants permanents (14, 34, 54) agencés sur le rotor sont prévus pour engendrer un flux excitateur et il est prévu au moins une bobine excitatrice électrique (12, 15, 32), dans lequel le rotor comprend au moins une partie en forme de godet (8, 28, 38, 58) qui comprend une paroi cylindrique (8a, 28a, 38a, 58a) ainsi qu'une paroi de fond (8b, 28b, 38b, 58b), ladite paroi de fond (8b, 28b, 38b, 58b) étant agencée perpendiculairement et la paroi cylindrique (8a, 28a, 38a, 58a) étant agencée coaxialement à l'axe de l'arbre de rotor (1, 39, W), et la paroi de fond (8b, 28b, 38b, 58b) est reliée à l'arbre de rotor (1, 39, W) pour la transmission d'une force ou d'un couple de rotation, dans lequel les éléments à aimants permanents (14, 34, 54) sont appliqués d'un côté sur la paroi cylindrique (8a, 28a, 38a, 58a) et sont fixés en sens périphérique les uns à côté des autres sur le rotor de l'entraînement, dans lequel les éléments à aimants permanents (14, 34, 54) forment conjointement avec le stator extérieur et intérieur (5, 6 ; 11, 11a) des circuits magnétiques qui traversent radialement totalement la partie cylindrique de rotor, dans lequel la paroi cylindrique (8a, 28a, 38a, 58a) est d'une seule pièce avec la paroi de fond (8b, 28b, 38b, 58b), et dans lequel un entrefer est prévu entre la paroi (8a, 28a, 38a, 58a) et la pièce de bouclage ou stator intérieur qui forme le bouclage magnétique, et le stator extérieur porte au moins une bobine excitatrice,
**caractérisé en ce que** les éléments à aimants permanents (14, 34, 54) sont agencés uniquement contre la paroi cylindrique (8a, 28a, 38a, 58a) et la paroi cylindrique est en matériaux ferromagnétique.

2. Entraînement électrique selon la revendication 1, **caractérisé en ce que** les éléments à aimants permanents (14, 34, 54) sont agencés, en direction axiale, parallèlement à la paroi cylindrique.

3. Entraînement électrique selon la revendication 1 ou 2, **caractérisé en ce que** la paroi cylindrique (8a, 28a, 38a, 58a) comprend des encoches ou des moulures (8d, 38d, 58d) qui s'étendent axialement et sont orientées radialement vers l'extérieur, les éléments à aimants permanents (14, 34, 54) étant soutenus ou appliqués contre celles-ci.

4. Entraînement électrique selon la revendication 3, **caractérisé en ce que** l'espace intermédiaire entre les encoches ou moulures (8f, 36, 56) et les éléments à aimants permanents (14, 34, 54) est rempli avec un agent de remplissage (16, 36, 56).

5. Entraînement électrique selon l'une des revendications précédentes, **caractérisé en ce que** le rotor est enveloppé à l'extérieur par une partie cylindrique enveloppante, ladite partie cylindrique étant en particulier une douille à paroi mince, dont l'épaisseur de paroi est inférieure à l'épaisseur de paroi de la paroi cylindrique.

6. Entraînement électrique selon la revendication 5, **caractérisé en ce que** la partie cylindrique enveloppante est en un matériau non-ferromagnétique.

7. Entraînement électrique selon l'une des revendications précédentes, **caractérisé en ce que** l'entraînement comprend deux parois cylindriques (8a), qui sont agencées axialement l'une à côté de l'autre et contre lesquelles sont agencés des éléments à aimants permanents (14) placés à l'extérieur, au moins une paroi de fond (8b) étant agencée entre les parois cylindriques (8a).

8. Entraînement électrique selon la revendication 7, **caractérisé en ce que** chaque paroi cylindrique (8a) forme, avec une paroi de fond (8b) respectivement associée, une partie en forme de godet (8).

9. Entraînement électrique selon la revendication 8, **caractérisé en ce que** les deux parois de fond (8b) sont appliquées l'une contre l'autre et sont en particulier reliées l'une à l'autre.

10. Entraînement électrique selon la revendication 7, **caractérisé en ce que** les parois cylindriques sont fixées contre l'une des parois de fond, ou **en ce que** ladite au moins une paroi cylindrique est réalisée d'une seule pièce avec la paroi de fond et l'autre paroi cylindrique est reliée à la paroi de fond.

11. Entraînement électrique selon l'une des revendications 7 à 10, **caractérisé en ce que** les deux parois cylindriques qui portent les éléments à aimants permanents sont enchâssées à l'extérieur par une douille ou une enveloppe commune, en particulier à paroi mince.

12. Entraînement électrique selon l'une des revendications précédentes, **caractérisé en ce que** l'arbre traverse ladite au moins une paroi de fond, et la paroi de fond est fixée, en particulier par coopération de formes, sur l'arbre.

13. Entraînement électrique selon l'une des revendications précédentes, **caractérisé en ce que** plusieurs pièces en forme de godet comprenant des aimants permanents sont agencées axialement les unes à côté des autres sur un arbre.

14. Entraînement électrique selon la revendication 13, **caractérisé en ce que** de pièces en forme de godet sont associées à un stator extérieur et intérieur commun.

15. Entraînement électrique selon l'une des revendications précédentes, **caractérisé en ce que** l'entraînement est réalisé sous forme de moteur à segments, dans lequel la partie en forme de godet est uniquement un segment d'un godet entier.

16. Entraînement électrique selon l'une des revendications précédentes 1 à 18, **caractérisé en ce que** la force magnétique déplace le rotor linéairement en va-et-vient en direction axiale de l'axe du rotor.

17. Entraînement électrique selon la revendication 16, **caractérisé en ce que** les éléments à aimants permanents sont appliqués contre des reliefs ou des moulures (8f, 38d, 58d), qui s'étendent radialement en périphérie et/ou qui s'étendent en direction axiale, et qui sont conformés radialement vers l'extérieur sur la paroi cylindrique.

18. Entraînement électrique selon l'une des revendications précédentes, **caractérisé en ce que** la paroi de fond présente la même épaisseur que la paroi cylindrique de la partie en forme de godet (divulgation par les figures, en particulier figure 1a).

19. Entraînement électrique selon l'une des revendications précédentes, **caractérisé en ce que** la paroi de fond présente une épaisseur autre que la paroi cylindrique de la partie en forme de godet, la paroi de fond étant en particulier plus épaisse que la paroi cylindrique.

20. Entraînement électrique selon l'une des revendications précédentes, **caractérisé en ce que** la paroi de fond est réalisée en plusieurs pièces, en particulier en deux pièces.

21. Entraînement électrique selon l'une des revendications précédentes, **caractérisé en ce que** la paroi cylindrique (8a, 28a, 38a) possède, sur son côté détourné de la paroi de fond, une collerette (9) dirigée en direction radiale.

22. Entraînement électrique selon l'une des revendications précédentes, **caractérisé en ce que** la forme de section transversale de la cloche ou de la pièce en forme de godet du rotor est réalisée sous forme circulaire, ovale, rectangulaire, ou sous forme de segment de cercle.

23. Entraînement électrique selon l'une des revendications précédentes, **caractérisé en ce que** l'épaisseur radiale des éléments à aimants permanents (14, 34, 54) est supérieure à l'épaisseur de la totalité de la paroi cylindrique (8a, 28a, 38a, 58a) (divulgation de cette caractéristique par les figures 1 à 4)
